Europäisches Patentamt

European Patent Office

Office européen des brevets

(11) Veröffentlichungsnummer: **0 303 015 B1**

# (12) EUROPÄISCHE PATENTSCHRIFT

(45) Veröffentlichungstag der Patentschrift: **04.09.91**

(51) Int. Cl.⁵: **B29B 17/00**

(21) Anmeldenummer: **88109340.5**

(22) Anmeldetag: **11.06.88**

(54) **Verfahren zur Herstellung von Formkörpern aus Papier und einem thermoplastischen Kunststoff.**

(30) Priorität: **05.08.87 DE 3725965**

(43) Veröffentlichungstag der Anmeldung:
**15.02.89 Patentblatt 89/07**

(45) Bekanntmachung des Hinweises auf die
Patenterteilung:
**04.09.91 Patentblatt 91/36**

(84) Benannte Vertragsstaaten:
**AT BE CH FR GB IT LI LU NL SE**

(56) Entgegenhaltungen:
**DE-A- 1 778 230**
**DE-A- 3 501 139**
**DE-B- 1 151 374**
**GB-A- 1 018 414**

(73) Patentinhaber: **SIGNODE SYSTEM GMBH**
**Magnusstrasse 18**
**W-4220 Dinslaken(DE)**

(72) Erfinder: **Warych, Hans, Dipl.-Ing.**
**Birkenkamp 23**
**W-4650 Gelsenkirchen(DE)**

(74) Vertreter: **Andrejewski, Walter et al**
**Patentanwälte Andrejewski, Honke & Partner**
**Postfach 10 02 54 Theaterplatz 3**
**W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Herstellen von Formkörpern, bei dem zu Schnitzeln zerkleinerte Abfälle, die Papier und thermoplastischen Kunststoff enthalten, in einer Schneckenstrangpresse aufgeschmolzen sowie darin extrudierfähig aufbereitet werden und die aufbereitete Mischung mit Hilfe eines an die Schneckenstrangpresse angeschlossenen Werkzeuges zu einem Formkörper geformt wird.

Zahlreiche Artikel des täglichen Lebens bestehen aus Papier, andere bestehen aus thermoplastischem Kunststoff. Weitere Artikel bestehen aus mit thernoplastischem Kunststoff beschichtetem Papier. Das gilt insbesondere für Artikel der Verpackungsindustrie. Bei der Herstellung dieser Artikel und nach deren Gebrauch entstehen Abfälle, die bisher, insbesondere in bezug auf die Kunststoffkomponente, die Umwelt und Deponien belasten.

Bei einem Verfahren der eingangs beschriebenen Gattung (DE-A-35 01 139) wird dem betrieblichen Verpackungsmaterial zusätzlich noch reiner Kunststoffabfall zugesetzt, wobei der Kunststoffabfall zumindest 75 Gew.% ausmachen soll. Der Papieranteil der Mischung beträgt deshalb weniger als 25 Gew.%. Die aufbereitete Mischung wird diskontinuierlich in eine Form extrudiert, in der vorzugsweise Zaunpfähle erzeugt werden. Der Zusatz reiner Kunststoffabfälle ist offensichtlich erforderlich, weil im Rahmen der bekannten Maßnahmen der Kunststoffanteil aus dem beschichteten Verpackungsmaterial allein nicht ausreicht, um das Verpackungsmaterial, insbesondere Papier, im fertigen Formkörper einzubinden. Neben der diskontinuierlichen Arbeitsweise stört der im, Vergleich zu Papier hohe Kunststoffanteil, der die zusätzliche Beigabe von reinen Kunststoffen erfordert.

Ferner ist es bekannt (DE-A-17 78 230) reine Polyäthylenabfälle zu Granulat zu zerkleinern und dem Granulat Füllstoffe in Form von Pappen- oder Papierabfällen zuzugeben sowie die Mischung anschließend plastisch zu verformen.

Der Erfindung liegt die Aufgabe zugrunde, anzugeben, wie man im Rahmen des gattungsgemäßen Verfahrens auf einfache Art und Weise zu einem Formkörper mit höherem Papieranteil kommt.

Diese Aufgabe wird dadurch gelöst, daß als Ausgangsmaterial ausschließlich Abfälle eines zumindest einseitig mit Kunststoff beschichteten Verpackungspapiers mit einem Quotienten aus dem Flächengewicht des Papiers und dem Flächengewicht des Kunststoffes im Bereich von 1,0 bis 6,5 eingesetzt werden und daß die aufbereitete Mischung kontinuierlich durch ein Strangpreßwerkzeug ausgepreßt und dabei zu dein Formkörper geformt wird.

Die Erfindung geht von der überraschenden Erkenntnis aus, daß der verhältnismäßig geringe Kunststoffanteil aus dem beschichteten Verpackungspapier für die einwandfreie Einbindung eines erheblich größeren Papieranteils ausreicht, wenn das kontinuierlich aufbereitete Material auch kontinuierlich extrudiert und zum Formkörper verarbeitet wird. Dafür ist wesentlich, daß die Papierbestandteile und die Kunststoffbestandteile durch den Beschichtungsvorgang bereits innig miteinander vereinigt sind. Das alles gilt insbesondere dann, wenn mit Abfällen gearbeitet wird, bei denen das Flächengewicht des Papiers etwa 200 g/m$^2$ und das des Kunststoffes etwa 60 g/m$^2$ ausmacht.

Zu in qualitativer Hinsicht besonders guten Formkörpern gelangt man, wenn die Kunststoffbeschichtung bzw. der Kunststoff aus Polyäthylen besteht. Im Rahmen der Erfindung liegt es, den Schnitzeln aus einseitig mit Kunststoff beschichtetem Verpackungspapier zusätzlich Papierschnitzel beizumischen. Man kann den Schnitzeln auch andere Füller beimischen. - Im Rahmen der Erfindung kann mit allen üblichen Schneckenstrangpressen gearbeitet werden. Vorzugsweise arbeitet man auf Zweischneckenextrudern.

Arbeitet man nach der Lehre der Erfindung, so kommt man zu Formkörpern, die sich in mechanischer Hinsicht besonders auszeichnen. Der Papierbestandteil bildet in den Formkörpern eine Bewehrung und ein Skelett in einer Kunststoffmatrix, was den Formkörpern besondere Biegefestigkeit und Druckfestigkeit, aber auch besondere Dauerfestigkeit verleiht. Der Kunststoffbestandteil macht die Formteile darüber hinaus witterungsbeständig und in den meisten Umgebungen auch außerordentlich korrosionsfest. Die hergestellten Formkörper können daher für viele Verwendungszwecke in der Bauindustrie und in der Verpackungsindustrie, z. B. in Form von Wandplatten oder Deckplatten für Wandplatten, Fußbodenplatten und Deckenplatten oder Deckplatten für Fußboden- und Deckenplatten, Profilen, auch für die Herstellung von Transportplatten eingesetzt werden.

## Patentansprüche

1. Verfahren zum Herstellen von Formkörpern, bei dem zu Schnitzeln zerkleinerte Abfälle, die Papier und thermoplastischen Kunststoff enthalten, in einer Schneckenstrangpresse aufgeschmolzen sowie darin extrudierfähig aufbereitet werden und die aufbereitete Mischung mit Hilfe eines an die Schneckenstrangpresse angeschlossenen Werkzeuges zu einem Formkörper geformt wird, **dadurch gekennzeichnet,** daß als Ausgangsmaterial ausschließlich Abfälle eines zumindest einseitig mit Kunststoff beschichteten Verpackungspapiers mit einem Quotienten aus dem Flächengewicht des Papiers und dem Flächengewicht des Kunststoffes im Bereich von 1,0 bis 6,5 eingesetzt werden und daß die aufbereitete Mischung kontinuierlich durch ein Strangpreßwerkzeug ausgepreßt und dabei zu dem Formkörper geformt wird.

2. Verfahren nach Anspruch 1, dadurch gekennzeichnet, daß mit Abfällen gearbeitet wird, bei denen das Flächengewicht des Papiers etwa 200 g/m², das des Kunststoffes etwa 60 g/m² ausmacht.

3. Verfahren nach Anspruch 1 oder 2, dadurch gekennzeichnet, daß die Kunststoffbeschichtung aus Polyäthylen besteht.

4. Verfahren nach einem der Ansprüche 1 bis 3, dadurch gekennzeichnet, daß den Schnitzeln aus einseitig mit Kunststoff beschichteten Verpackungspapier zusätzlich Papierschnitzel beigemischt werden.

5. Verfahren nach einem der Ansprüche 1 bis 4, dadurch gekennzeichnet, daß den Schnitzeln weitere Füller beigemischt werden.

## Claims

1. A process for the manufacture of moulded sections in which shredded scrap materials, that contain paper and thermoplastic material, are melted in a helical extrusion press and prepared therein to be capable of extrusion, and the prepared mixture is formed into a moulded section by means of a tool attached to the helical extrusion press, *characterized in that* as raw material, scrap pieces of packing paper coated on at least one side with plastics are exclusively used, with a quotient of the weight per unit area of paper to the weight per unit area of plastics in the range of 1 to 6.5, and that the prepared mixture is continuously pressed out through an extrusion press tool and is thereby formed into the moulded section.

2. A process according to Claim 1, *characterized in that* scrap material is used in which the weight per unit area of the paper amounts to about 200 g/m² and that of the plastics to about 60 g/m².

3. A process according to Claim 1 or 2, *characterized in that* the plastics coating consists of polyethylene.

4. A process according to one of Claims 1 to 3, *characterized in that* additional paper shreddings are mixed in with the shreddings of packing paper coated with plastics on one side.

5. A process according to one of Claims 1 to 4, *characterized in that* further fillers are mixed in with the shreddings.

## Revendications

1. Procédé pour fabriquer des articles moulés, selon lequel on fait fondre, dans une presse à extruder, des déchets fragmentés sous la forme de rognures et contenant du papier et une matière thermoplastique, et on les soumet à extrusion dans cette presse, et on donne au mélange préparé la forme d'un article moulé, à l'aide d'un outil raccordé à la presse à extruder, caractérisé en ce qu'on utilise comme matériau de départ exclusivement des déchets d'un papier d'emballage, dont une face au moins est recouverte par une matière plastique, avec un quotient du grammage du papier au grammage de la matière plastique situé dans la gamme entre 1,0 et 6,5, et que le mélange préparé est refoulé continûment par un outil d'extrusion et est mis sous la forme de l'article moulé.

2. Procédé selon la revendication 1, caractérisé en ce qu'on travaille avec des déchets, dans lesquels le grammage du papier est égal à environ 200 g/m² et celui de la matière plastique est égal à environ 60 g/m².

3. Procédé selon la revendication 1 ou 2, caractérisé en ce que le revêtement en matière plastique est formé de polyéthylène.

4. Procédé selon l'une des revendications 1 à 3, caractérisé en ce qu'on mélange en outre des rognures de papier aux rognures d'un papier d'emballage dont une face est recouverte de matière plastique.

5. Procédé selon l'une des revendications 1 à 4, caractérisé en ce qu'on mélange d'autres substances de remplissage aux rognures.